# EUROPÄISCHE PATENTANMELDUNG

(11) **EP 3 839 853 A1**
(43) Veröffentlichungstag der Anmeldung: **23.06.2021**
(21) Anmeldenummer: 20211439.3
(22) Anmeldetag: 03.12.2020
(51) Int. Cl.: G06Q 20/06, G07F 15/00, G06Q 20/14

(54) **AUTONOMES HAUSGERÄT**

(30) Priorität: 19.12.2019 DE 102019220240
(71) Anmelder: BSH Hausgeräte GmbH, 81739 München (DE)
(72) Erfinder: Gabler, Dennis, 84577 Tüßling (DE); Söllner, Christoph, 81475 München (DE); Treitinger, Gerhard, 82008 Unterhaching (DE)

(57) **Zusammenfassung**

Ein Hausgerät umfasst eine Funktionskomponente, die dazu eingerichtet ist, eine haushaltsrelevante Funktion zu erbringen; und eine Steuerkomponente zur Steuerung der Funktionskomponente. Dabei ist die Steuerkomponente dazu eingerichtet, ein Guthaben einer Kryptowährung zu verwalten; wobei das Guthaben ausschließlich für Mittel oder Dienste eingesetzt werden kann, welche der Erbringung der Funktion durch das Hausgerät dienen.

## Beschreibung

Die Erfindung betrifft ein autonomes Hausgerät. Insbesondere betrifft die Erfindung ein Hausgerät, das seinen eigenen Betrieb verbessert steuern kann.

Ein Hausgerät ist dazu eingerichtet, innerhalb eines Haushalts betrieben zu werden und eine haushaltsrelevante Funktion zu erbringen. Beispielsweise kann das Hausgerät einen Geschirrspüler oder eine Waschmaschine umfassen. Der Betrieb des Hausgeräts ist üblicherweise abhängig von einer Bedarfslage im Haushalt. Innerhalb vorbestimmter Grenzen kann das Hausgerät häufiger oder weniger häufig betrieben werden. Üblicherweise erfordert der Betrieb des Hausgeräts noch weitere Voraussetzungen, insbesondere einen Betriebsstoff wie ein Wasch- oder Spülmittel. Für einen ausreichend großen Vorrat an Betriebsmittel zu sorgen fällt üblicherweise in die Verantwortung eines Benutzers. Es wurden auch schon Vorschläge gemacht, ein Hausgerät mit einer Möglichkeit auszustatten, auf einen zur Neige gehenden Vorrat von Betriebsmitteln hinzuweisen. Der Benutzer kann in Antwort auf den Hinweis den Vorrat selbst auffüllen oder für eine entsprechende Bestellung sorgen.

WO 0 2018 204 041 A1 schlägt eine Art digitalen Marktplatz vor, der das Beschaffen eines vorbestimmten Produkts in Abhängigkeit eines Angebots oder Preises erleichtern soll. Eine Bezahlung des Produkts kann mit einer digitalen Währung erfolgen, die insbesondere auf die Blockchain-Technologie aufbauen kann.

Eine der vorliegenden Erfindung zu Grunde liegende Aufgabe besteht in der Angabe einer verbesserten Technik, um ein Hausgerät autark zu betreiben. Die Erfindung löst diese Aufgabe mittels der Gegenstände der unabhängigen Ansprüche. Unteransprüche geben bevorzugte Ausführungsformen wieder.

Nach einem ersten Aspekt der Erfindung umfasst ein Hausgerät eine Funktionskomponente, die dazu eingerichtet ist, eine haushaltsrelevante Funktion zu erbringen; und eine Steuerkomponente zur Steuerung der Funktionskomponente. Dabei ist die Steuerkomponente dazu eingerichtet, ein Guthaben einer Kryptowährung zu verwalten; wobei das Guthaben ausschließlich für Mittel oder Dienste eingesetzt werden kann, welche der Erbringung der Funktion durch das Hausgerät dienen.

Im Unterschied zu bisherigen Technologien kann das Hausgerät dazu eingerichtet sein, ein Mittel oder einen Dienst rechtsverbindlich zu ordern. Eine Freigabe eines Buchungs- oder Bestellvorgangs durch einen Benutzer ist nicht erforderlich. Die Kryptowährung kann beispielsweise Bitcoin, Libra oder eine zum Zeitpunkt des Verfassens dieses Dokuments noch nicht bekannte Währung umfassen. Optional kann auch eine eigene Kryptowährung ins Leben gerufen werden, um die hierin beschriebene Technik optimal zu nutzen. Diese Kryptowährung könnte beispielsweise "Home Connect Coin" genannt werden. die Kryptowährung kann auf den Erwerb oder Bezug vorbestimmter Waren oder Dienstleistungen beschränkt sein und nicht in andere Valuta, insbesondere eine Währung wie Euro oder Dollar, konvertiert werden. Das Guthaben kann beispielsweise in einer Cyberwallet der Kryptowährung gespeichert und fest an das Hausgerät gebunden sein. Dazu kann die Cyberwallet beispielsweise mittels eines kryptographischen Schlüssels versperrt sein, welcher in der Steuerkomponente sicher aufbewahrt ist.

Vermittels der vorgeschlagenen Technik kann der Betrieb des Hausgeräts verbessert in Abhängigkeit eines technischen Bedarfs eines Mittels oder Dienstes gesteuert werden. Das Hausgerät kann einen Zeitpunkt, einen Umfang, eine Art oder eine Qualität des Mittels oder Dienstes auf der Basis technischer Gegebenheiten selbst bestimmen. So kann beispielsweise vermieden werden, dass eine Wartung des Hausgeräts zu spät oder zu selten stattfindet, sodass das Hausgerät nicht unnötig altert oder verschleißt.

Außerdem kann das Hausgerät in Kombination mit einem bestimmten Mittel oder Dienst bereitgestellt werden. Beispielsweise kann das Hausgerät dazu eingerichtet sein, das Mittel oder den Dienst derart zu ordern, dass das Hausgerät CO₂-neutral betrieben werden kann. Das Hausgerät kann auch im Bündel mit einem Mittel oder Dienst bereitgestellt werden, beispielsweise zusammen mit einem vorbestimmten Wasser- oder Stromtarif.

Der Betrieb des Hausgeräts kann auch innerhalb vorbestimmter technischer Grenzen erfolgen, die beispielsweise durch einen Hersteller des Hausgeräts vorgegeben sein können. So kann etwa sichergestellt werden, dass dem Hausgerät ein Betriebs- oder Schmierstoff in ausreichender Menge und/oder Qualität zur Verfügung steht. Beispielsweise kann der Hersteller ein Garantieversprechen von der Einhaltung einer entsprechenden Vorgabe machen. Durch das autarke Hausgerät kann das Einhalten der Vorgabe verbessert durchgesetzt werden. Das Hausgerät kann nach Art eines Dienstes einem Benutzer bereitgestellt werden, wobei der Benutzer das Hausgerät für seinen Hauptzweck benutzen kann, und mit einer Beschaffung eines Mittels oder Dienstes, das oder der für den Betrieb des Hausgeräts erforderlich sein kann, nichts zu tun hat. Durch die Verwaltung des Guthabens durch das Hausgerät kann zuverlässig und genau bestimmt werden, welche Kosten der Betrieb des Hausgeräts verursacht. Diese Information kann für einen Benutzer interessant sein und beispielsweise auch für die Weitergabe des Hausgeräts an einen anderen Benutzer relevant sein.

Ein Mittel, das durch das Hausgerät gekauft werden kann oder ein Dienst, der durch das Hausgerät in Anspruch genommen werden kann, sind bevorzugt derart vorbestimmt, dass ein Missbrauch des Guthabens durch das Hausgerät nicht möglich ist. Anders ausgedrückt kann verhindert werden, dass das Guthaben zu einem anderen Zweck als zum Ordern des Diensts oder Mittels eingesetzt wird. Auch ein übermäßiges Ordern eines Diensts oder Mittels - möglicherweise in der Absicht, das Guthaben anders als vorgesehen einzusetzen - kann erfasst und optional eine Gegenmaßnahme eingeleitet werden.

In einer ersten Variante kann das Guthaben für ein Betriebsmittel zum Betrieb des Hausgeräts eingesetzt werden. Das Hausgerät kann das Betriebsmittel bestellen und/oder eine Lieferung veranlassen. Das Betriebsmittel kann insbesondere ein Reinigungsmittel umfassen. In weiteren Ausführungsformen kann das Betriebsmittel auch eine Zu- oder Abfuhr von Wasser umfassen. Dies kann insbesondere für ein Hausgerät gelten, das als Reinigungsgerät realisiert ist. Ähnliche Betriebsmittel können beispielsweise im Fall eines Geschirrspülers ein Regenerationssalz oder einen Klarspüler, im Fall einer Dunstabzugshaube einen Papier- oder Kohlefilter, oder im Fall eines Staubsaugers einen Filterbeutel umfassen.

In einer zweiten Variante kann das Guthaben für Energie zum Betrieb des Hausgeräts eingesetzt werden. Dazu kann beispielsweise ein vorbestimmter Tarif gebucht werden, um den Haushalt mit elektrischem Strom zu versorgen. Der Tarif kann unabhängig von einem bereits einen für den Haushalt geltenden Tarif oder für den gesamten Haushalt gebucht werden. In einer bevorzugten Ausführungsform wird der Tarif derart gebucht, dass nur die vom Hausgerät bei dessen Betrieb aufgenommene Energie über den Tarif abgerechnet wird. In einer Ausführungsform kann das Hausgerät zusammen mit einem Zugang zu einem vorbestimmten Energieversorgungstarif bereitgestellt sein. Das Hausgerät und die zu seinem Betrieb erforderliche Energie können somit verbessert als eine Einheit gebündelt zugänglich gemacht werden.

In einer dritten Variante kann das Guthaben für einen Hilfsstoff zum Betrieb des Hausgeräts eingesetzt werden. Der Hilfsstoff kann insbesondere ein Schmier- oder Pflegemittel umfassen, das üblicherweise durch einen Benutzer angewendet wird. Im Fall eines Geschirrspülers kann dies beispielsweise ein spezielles Reinigungsmittel für einen Innenraum des Geschirrspülers umfassen, das etwa nach ca. 20 Betriebsläufen angewendet wird. Handelt es sich beim Hausgerät beispielsweise um einen Wasserkocher, so kann der Hilfsstoff einen Entkalker umfassen, der regelmäßig angewendet werden sollte, um eine Betriebsfähigkeit des Hausgeräts aufrechtzuerhalten.

In einer vierten Variante kann das Guthaben zur Wartung oder Instandsetzung des Hausgeräts eingesetzt werden. Eine entsprechende Dienstleistung wird häufig auch Service genannt und im Allgemeinen durch ein geschultes Fachpersonal durchgeführt. Eine Wartung kann beispielsweise ein Nachstellen, Schmieren, Konservieren, Nachfüllen, Ergänzen eines Betriebsstoffs oder eines Verbrauchsmittels umfassen. Auch ein planmäßiges Austauschen eines Verschleißteils, etwa eines Filters oder einer Dichtung, oder ein Reinigen des Hausgeräts kann Bestandteil der Wartung sein. Eine Instandsetzung des Hausgeräts kann einen Austausch einer Komponente des Hausgeräts erfordern. Die Komponente kann insbesondere Teil der Funktionskomponente sein. In einer besonders bevorzugten Ausführungsform können die Wartung oder die Instandsetzung vorausschauend geplant werden. Dabei kann ein Verschleißverhalten des Hausgeräts bestimmt und eine Wartung derart terminiert werden, dass sie idealerweise am Ende der Lebensdauer einer Komponente, jedoch noch vor dem Auftreten eines Schadens an einer anderen Komponente stattfindet.

In noch einer weiteren Variante kann das Guthaben auch zum Erwerb eines Ersatzteils des Hausgeräts eingesetzt werden. Das Ersatzteil wird üblicherweise von einem Hersteller des Hausgeräts bereitgestellt, der auch üblicherweise zu Beginn der Lebensdauer des Hausgeräts das vorbestimmte Guthaben einrichtet. Ist der Einsatz eines Ersatzteils erforderlich, so kann der Hersteller prüfen, welcher Preis angesichts einer zurückliegenden Nutzung oder angesichts Erfahrungen mit einer defekten Komponente des Hausgeräts für das Ersatzteil angemessen erscheint. Unvorhergesehene Kosten für einen Benutzer bzw. Besitzer des Hausgeräts können so verbessert abgefedert werden. Diese Vorgehensweise kann auch auf ein Zubehörteil für das Hausgerät erstreckt werden. Dabei kann das Zubehörteil insbesondere in Abhängigkeit eines technischen Bedarfs erworben werden. Das Bestimmen des Zubehörteils kann durch das Hausgerät selbst oder durch einen Benutzer erfolgen.

In einer weiter bevorzugten Ausführungsform kann das Guthaben nicht erhöht werden. Es handelt sich somit um ein Einweg-Guthaben, das vor dem Inverkehrbringen des Hausgeräts eingerichtet und dann gegebenenfalls bei Ordern eines Mittels oder Dienstes verringert wird. Erreicht das Hausgerät das Ende seiner Nutzungsdauer, bevor das Guthaben aufgebraucht ist, so kann das Guthaben verfallen, wenn das Hausgerät verschrottet wird. Dadurch kann verbessert ermöglicht werden, dass ein Benutzer einen angemessenen Preis für den Erwerb oder die Bereitstellung eines Hausgeräts bezahlt, ohne das Risiko schwer überschaubarer Kosten tragen zu müssen, die mit einem Betrieb des Hausgeräts verbunden sein können.

Es ist insbesondere bevorzugt, dass das Guthaben nicht auf ein anderes Gerät übertragbar ist. So kann das Guthaben originär dem Hausgerät zugeordnet bleiben, ohne dass es auf eine andere als die vorbestimmte Weise ausgegeben werden kann. Insbesondere kann eine Übertragung des Guthabens oder eines Teils davon an ein anderes Hausgerät verhindert sein. Das Übertragen des Guthabens im Gegenzug für ein betriebsbedingt erforderliches Mittel oder einen Dienst kann von dieser Einschränkung nicht betroffen sein.

In unterschiedlichen Ausführungsformen kann das Hausgerät beispielsweise eine Waschmaschine, einen Wäschetrockner, einen Geschirrspüler, eine Abzugshaube, einen Herd, einen Ofen, einen Kühlschrank, eine Kaffeemaschine oder einen Staubsauger umfassen. Derartige Geräte werden üblicherweise in einem Haushalt betrieben, wozu sie mit zusätzlichen Mitteln oder Diensten versorgt werden müssen. In noch einer weiteren Ausführungsform kann das Hausgerät praktisch jedes elektrisch betreibbare Gerät umfassen, das in einem Haushalt eingesetzt werden kann.

In einer Fortbildung der vorliegenden Erfindung kann die Steuerkomponente auch dazu eingerichtet sein, ein weiteres Guthaben einer Kryptowährung zu verwalten, wobei das weitere Guthaben durch einen Benutzer aufgeladen werden kann. Beide Guthaben können auf die gleiche Verwendung eingeschränkt sein. Im Unterschied zum oben genannten primären Guthaben kann ein Einsatz des durch den Benutzer verwaltbaren sekundären Guthabens für ein betriebsbedingt erforderliches Mittel oder einen Dienst durch den Benutzer beeinflusst werden. Beispielsweise kann der Benutzer unter verschiedenen möglichen Betriebsmitteln wählen, die das Hausgerät benötigt. Anders ausgedrückt kann das weitere Guthaben dem gleichen Zweck dienen, jedoch aus einer anderen Quelle stammen. In unterschiedlichen Ausführungsformen können zuerst das Guthaben und dann das weitere Guthaben ausgegeben werden, oder beide Guthaben werden zu jeweils vorbestimmten Teilen belastet.

Nach einem zweiten Aspekt der vorliegenden Erfindung umfasst ein Verfahren zum Steuern eines Hausgeräts, das dazu eingerichtet ist, eine haushaltsrelevante Funktion zu erbringen, Schritte des Bestimmens eines Mittels oder Dienstes, welcher der Erbringung der Funktion durch das Hausgerät dient; und des Einsetzens eines Guthabens, das dem Hausgerät in Form einer Kryptowährung zugeordnet ist, für das Mittel oder den Dienst. Das Verfahren kann insbesondere in Verbindung mit einem hierin beschriebenen Hausgerät durchgeführt werden. Die Steuerkomponente eines solchen Hausgeräts kann dazu eingerichtet sein, das Verfahren ganz oder teilweise auszuführen. Dazu kann die Steuerkomponente einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Steuerkomponente übertragen werden oder umgekehrt.

Das Verfahren kann dahingehend ausgebaut werden, dass die Beschaffung des Mittels oder Dienstes verbessert ökonomisch gestaltet wird. In einer Ausführungsform können verschiedene Angebote für das Mittel oder den Dienst bestimmt werden, und ein Mittel oder ein Dienst kann in Abhängigkeit einer Verfügbarkeit, eines Preises und/oder einer Dringlichkeit des Beschaffens ausgewählt werden. Das Mittel oder der Dienst können so verbessert kostengünstig und trotzdem rechtzeitig für den Betrieb des Hausgeräts beschafft werden. Die Tätigkeit einer Auswahl einer Art, einer Gebindegröße oder eines Typs eines erforderlichen Mittels oder Dienstes können einem Benutzer des Hausgeräts so erspart bleiben.

Kann das Mittel gelagert werden, beispielsweise im Fall eines Reinigungsmittels, so kann eine vorhandene Lagerkapazität ausgenutzt werden, um möglichst eine preislich attraktive Gebindegröße des Mittels zu beschaffen. Insbesondere kann das Mittel in Abhängigkeit einer gesamten Lagerkapazität, einer verfügbaren Lagerkapazität und eines Preises für das Mittel ausgewählt werden. Ein voraussichtlicher Verbrauch des Mittels durch das Hausgerät kann ebenfalls berücksichtigt werden. Ein Versorgungsengpass kann verbessert überbrückt werden. Eine gute Marktsättigung, beispielsweise aus saisonalen Gründen, kann verbessert ausgenutzt werden.

In einer weiteren Ausführungsform kann ein Betrieb des Hausgeräts in Abhängigkeit eines Preises für das Mittel oder den Dienst gesteuert werden. Beispielsweise kann ein Betriebslauf des Hausgeräts erst dann gestartet werden, wenn ein Preis für Energie oder Wasser einen vorbestimmten Schwellenwert unterschritten hat. Der Schwellenwert kann in Abhängigkeit eines Zeitpunkts angepasst werden, zu dem der Betriebslauf abgeschlossen sein soll. Der Betrieb kann insbesondere in Abhängigkeit einer erwarteten Entwicklung des Preises gesteuert werden. Der Betriebslauf kann so lange verzögert werden, bis beispielsweise ein Energiepreis voraussichtlich ein Minimum erreicht hat. Dabei kann der Betriebslauf so terminiert werden, dass er möglichst abgeschlossen ist, bevor der Preis wieder ansteigt.

In noch einer weiteren Ausführungsform kann das Hausgerät einen automatisch ausgelösten Liefervertrag abschließen, der unter der Bezeichnung smart contract bekannt ist. Ein smart contract legt eine Leistung und eine Gegenleistung fest, von denen eine oder beide von einem objektiv überprüfbaren Parameter abhängig sein können. Rahmenbedingungen der Transaktion, insbesondere ein Lieferzeitpunkt, können auf der Basis des objektiv bestimmbaren Parameters gesteuert werden. Auf diese Weise können beide Vertragsparteien jeweils ihnen relevante Rahmenbedingungen eines Handels festschreiben, wobei der tatsächliche Handel erst abgewickelt wird, wenn alle vorbestimmten Bedingungen erfüllt sind. Für einen Energieabnehmer kann sich dadurch beispielsweise der Vorteil günstiger Energie ergeben, während für einen Energieanbieter eine verbesserte Planung einer bereitzustellenden Energiemenge ermöglicht werden kann.

Die Erfindung wird nun unter Bezug auf die beiliegenden Figuren genauer beschrieben, in denen:
- Figur 1: ein Hausgerät; und
- Figur 2: ein Ablaufdiagramm eines Verfahrens darstellt.

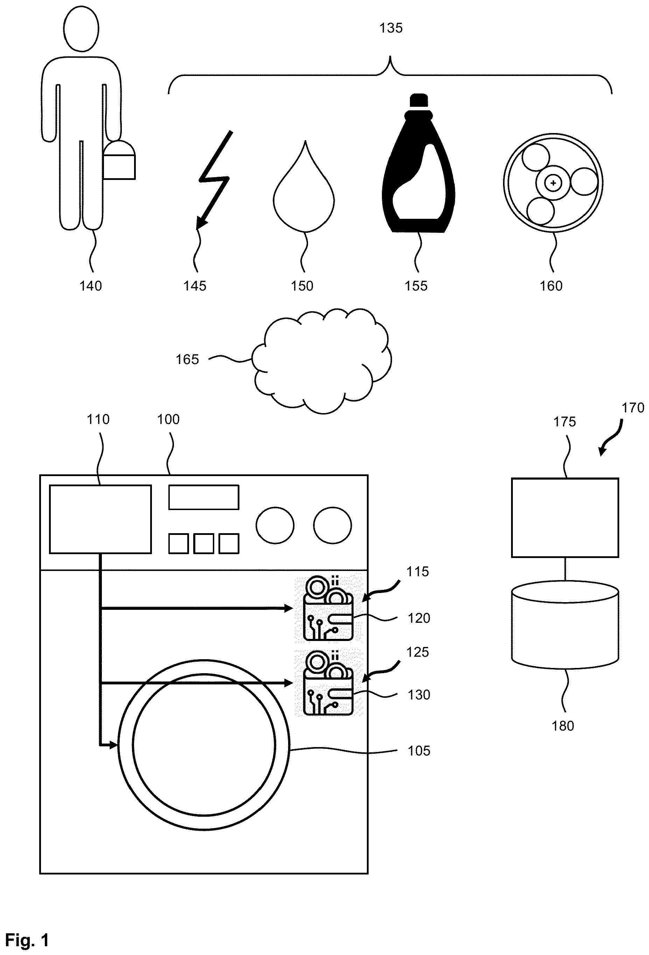

Figur 1 zeigt ein Hausgerät 100, beispielhaft in Form einer Waschmaschine, wobei das Hausgerät 100 zum Einsatz in einem üblichen Haushalt eingerichtet ist, beispielsweise in einem Wohnhaus oder einer Wohnung. Das Hausgerät 100 umfasst eine Funktionskomponente 105, die dazu eingerichtet ist, eine vorbestimmte Funktion zu erbringen, die im Haushalt gewünscht ist, und eine Steuerkomponente 110, die dazu eingerichtet ist, die Funktionskomponente 105 zu steuern. Vorliegend kann die Funktionskomponente 105 beispielsweise eine Waschtrommel, einen Antriebsmotor, eine Heizung und eines oder mehrere steuerbare Ventile umfassen. Die Funktionskomponente 105 kann auch mehrere Elemente umfassen, im Fall einer Waschmaschine beispielsweise alle der oben genannten.

Die Steuerkomponente 110 ist dazu eingerichtet die Funktionskomponente 105 zu steuern und kann insbesondere eine Verarbeitungseinrichtung umfassen, bevorzugt einen programmierbaren Mikrocomputer oder Mikrocontroller. Außerdem ist die Steuerkomponente 110 dazu eingerichtet, ein vorbestimmtes Guthaben 115 zu verwalten. Das Guthaben 115 kann beispielsweise auf einer Cyberwallet 120 gespeichert sein. Optional kann die Steuerkomponente 110 zur Verwaltung eines weiteren Guthabens 125 eingerichtet sein, das auf einer weiteren Cyberwallet 130 gespeichert sein kann. Im Folgenden wird primär Bezug genommen auf das Guthaben 115 und die Cyberwallet 120. Das weitere Guthaben 125 bzw. die weitere Cyberwallet 130 können in gleicher Weise verwendet werden, wenn dies nicht anders beschrieben ist.

Zum Betrieb des Hausgeräts 100 ist üblicherweise ein Mittel 135 und/oder ein Dienst 140 erforderlich. Das Mittel 135 kann beispielsweise eine Versorgung mit Energie 145, einem Hilfsstoff 150, insbesondere Wasser, ein Betriebsmittel 155, insbesondere ein Reinigungsmittel, oder einem Ersatz- oder Zubehörteil 160 erfordern. Der Dienst 140 wird üblicherweise durch eine hierzu beauftragte Person erfüllt. Die Energie 145 kann insbesondere elektrisch, jedoch auch auf der Basis eines beliebigen anderen Energieträgers bereitgestellt sein, beispielsweise eines fossilen Brennstoffs wie Gas oder Petroleum. Innerhalb eines Haushalts wird das Hausgerät 100 üblicherweise mit einem Energieversorgungsnetzwerk verbunden, an das der Haushalt angeschlossen ist. Der Hilfsstoff 150 kann ebenfalls über ein Versorgungsnetzwerk bereitgestellt sein. Verbrauchter Hilfsstoff 150 kann über ein Entsorgungsnetzwerk abgeleitet werden. Üblicherweise sind Versorgung und Entsorgung mit dem Hilfsstoff 150 im Haushalt kombiniert vorgesehen.

Das Betriebsmittel 155 kann auch beispielsweise ein Schmiermittel, einen Klarspüler, ein Regenerationssalz oder einen ähnlichen Stoff umfassen, der insbesondere zur Behandlung eines Haushaltsguts im Hausgerät 100 eingesetzt werden kann. Der Hilfsstoff 150 oder das Betriebsmittel 155 können auch zum Betrieb des Hausgeräts 100 erforderlich sein. Das Ersatzteil 160 kann in das Hausgerät 100 eingesetzt werden, wenn eine korrespondierende Komponente des Hausgeräts 100 defekt ist oder sich dem Ende seiner Lebensdauer nähert.

Dabei können Verschleißteile und Ersatzteile 160 voneinander unterschieden werden. Ein Verschleißteil hat üblicherweise eine kürzere projektierte Lebensdauer als das gesamte Hausgerät 100. Wann das Verschleißteil 160 am Hausgerät 100 erneuert werden muss, hängt außerdem üblicherweise von einer Art, Intensität oder Häufigkeit eines Betriebs des Hausgeräts 100 ab. Zum Austauschen des Ersatzteils 160 kann Spezialwissen und gegebenenfalls auch ein besonderes Werkzeug erforderlich sein, sodass der Austausch allgemein im Rahmen einer Dienstleistung erbracht wird. Der Dienst 140 kann insbesondere eine Wartung oder eine Instandsetzung des Hausgeräts 100 betreffen. Außerdem kann der Dienst 140 zur Fehlersuche beauftragt werden, beispielsweise wenn ein Funktionsergebnis des Hausgeräts 100 aus unbekannten Gründen hinter den Erwartungen eines Benutzers zurückbleibt.

Das Hausgerät 100 kann mittels eines Netzwerks 165 derart mit Anbietern eines Mittels 135 oder eines Dienstes 140 verbunden sein, dass es das Mittel 135 oder den Dienst 140 ordern bzw. veranlassen kann. Außerdem kann das Hausgerät 100 über das Netzwerk 165 mit einer externen Stelle 170 kommunikativ verbunden sein, die Informationen über den Betrieb des Hausgeräts 100 sammeln und verarbeiten kann. Die externe Stelle 170 umfasst üblicherweise eine Verarbeitungseinrichtung 175 sowie bevorzugt eine Speichereinrichtung 180. Bevorzugt ist die externe Stelle 170 dazu eingerichtet, Betriebsdaten einer Vielzahl Hausgeräte 100 zu sammeln und zu verarbeiten. Zusätzlich können Informationen über Hausgeräte 100 beispielsweise aus einer Konstruktion, Produktion oder Vermarktung berücksichtigt werden. Die externe Stelle 170 kann insbesondere statistische Daten zum Betrieb oder dem Lebensdauerverhalten von typgleichen oder typähnlichen Hausgeräten 100 bereitstellen.

Zu einem individuellen Hausgerät 100 kann die externe Stelle 170 beispielsweise Verbrauchsdaten eines Mittels 135 bestimmen und gegebenenfalls prognostizieren. Eine erforderliche Wartung des Hausgeräts 100 kann vorausschauend bestimmt werden. Einige der beschriebenen Funktionen der externen Stelle 170 können auch lokal durch die Steuervorrichtung 110 des Hausgeräts 100 erbracht werden.

Es wird vorgeschlagen, dass das Hausgerät 100 dazu eingerichtet ist, seinen Betrieb verbessert autark zu steuern. Dazu kann das Hausgerät 100 das Guthaben 115, das ihm bevorzugt im Rahmen seiner Herstellung verliehen wurde, für ein Mittel 135 oder einen Dienst 140 bereitstellen, die den Betrieb des Hausgeräts 100 ermöglichen oder sicherstellen. Eine Auswahl einer Art, einer Menge, einem Lieferzeitpunkt, einer Qualität oder eines Preises, die mit der Beschaffung des Mittels 135 oder des Dienstes 140 verbunden sein können, können durch das Hausgerät 100 oder durch die externe Stelle 170 erfolgen. In einer Ausführungsform sind unterschiedliche Anbieter für eines der Mittel 135 oder den Dienst 140 vorgesehen, und in Abhängigkeit eines technischen Parameters, insbesondere des Hausgeräts 100, kann einer der Anbieter mit der Bereitstellung des Mittels 135 oder des Dienstes 140 beauftragt werden.

Ein Zweck der Verwaltung des Guthabens 115 durch das Hausgerät 100 besteht darin, einen Benutzer von der Planung von Vorgängen zu entlasten, die für den Betrieb des Hausgeräts 100 erforderlich sind. Dabei kann einerseits sichergestellt sein, dass das Hausgerät 100 das Guthaben 115 ausschließlich für ein Mittel 135 oder einen Dienst 140 ausgeben kann, die für den Betrieb des Hausgeräts 100 erforderlich sind. Andererseits kann sichergestellt werden, dass das beschaffte Mittel 135 oder der georderte Dienst 140 vorbestimmte Qualitätsansprüche erfüllt, die einen möglichst reibungslosen und langlebigen Betrieb des Hausgeräts 100 ermöglichen können.

Das weitere Guthaben 125 kann in ähnlicher Weise verwendet werden, ist jedoch bevorzugt im Gegensatz zum ersten Guthaben 115 wiederaufladbar. Ein Benutzer kann beispielsweise durch Einsatz konvertibler Valuta zusätzliches weiteres Guthaben 125 beschaffen und in der weiteren Cyberwallet 130 ablegen. Auf einen Einsatz des weiteren Guthabens 125 kann der optional Benutzer Einfluss nehmen, jedoch bevorzugt nur, indem das weitere Guthaben 125 vom Hausgerät 100 abgebucht oder zur Beschaffung eines Mittels 135 oder Dienstes 140 eingesetzt wird, die für den Betrieb des Hausgeräts 100 dienlich oder erforderlich sind.

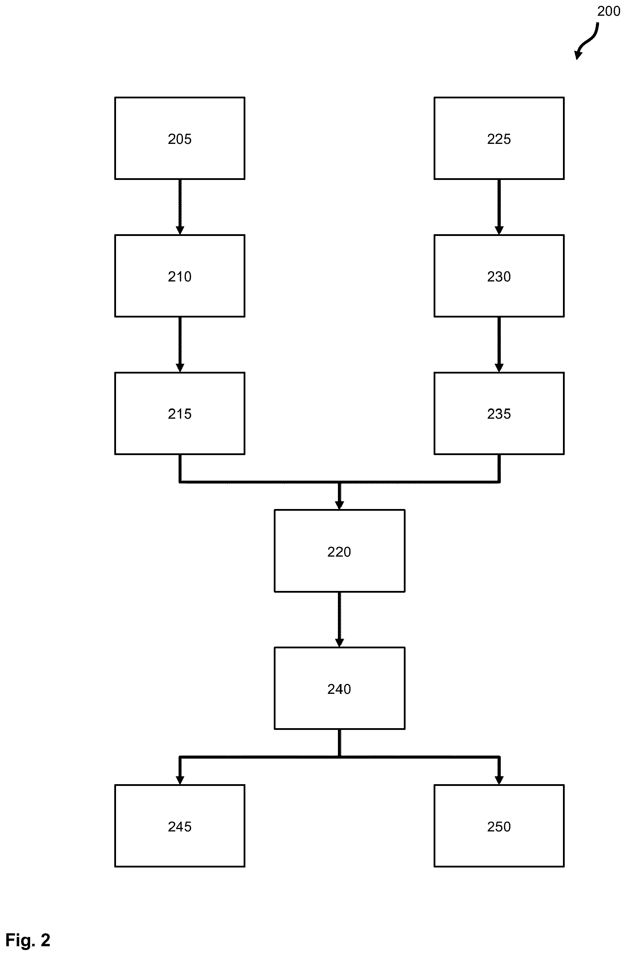

Figur 2 zeigt ein Ablaufdiagramm eines Verfahrens 200, das insbesondere in Verbindung mit einem Hausgerät 100 ausgeführt werden kann.

In einem ersten Schritt 205 kann ein Dienst 140 bestimmt werden, der am Hausgerät 100 durchgeführt werden sollte, um dessen Funktionsfähigkeit sicherzustellen oder wiederherzustellen. Der Dienst 140 kann beispielsweise in Antwort auf eine zuvor bestimmte Fehlfunktion oder ein nicht befriedigendes Ergebnis eines Betriebslaufs des Hausgeräts 100 bestimmt werden und beispielsweise eine Fehlersuche, eine Reinigung, eine Wartung oder eine Reparatur umfassen.

In einem Schritt 210 kann ein verfügbarer Dienst 140 bestimmt werden. Unterschiedliche Anbieter können den bestimmten Dienst 140 ganz oder in Teilen anbieten. Konditionen für die Erbringung des Dienstes 140 können variieren. In einem Schritt 215 kann ein Termin für die Durchführung des Dienstes 140 bestimmt werden. Der Termin kann von der Verfügbarkeit seitens eines Anbieters des Dienstes 140 und einer Anwesenheit einer Person in einem Haushalt abhängig sein, in dem das Hausgerät 100 aufgestellt ist. Außerdem kann in einem Schritt 220 ein Preis für die Erbringung des Dienstes 140 bestimmt werden.

Eine Entscheidung, auf welche Weise der Dienst 140 durchgeführt werden soll, bzw. von welchem Anbieter der Dienst 140 erbracht werden soll, kann in Abhängigkeit des Preises, eines verfügbaren Termins oder einer Dringlichkeit einer durchzuführenden Maßnahme bestimmt werden. Es ist zu beachten, dass die Schritte 205 bis 220 nicht notwendigerweise in der dargestellten Reihenfolge durchgeführt werden müssen.

In ähnlicher Weise kann ein erforderliches Mittel 135 für den Betrieb des Hausgeräts 100 beschafft bzw. geordert werden. In einem Schritt 225 kann ein erforderliches Mittel 135 bestimmt werden. Das Mittel 135 ist üblicherweise regulär für den Betrieb des Hausgeräts 100 erforderlich, seine Beschaffung kann jedoch auch zur Durchführung eines vorbestimmten Dienstes 140 erforderlich sein, beispielsweise wenn es sich um ein Ersatzteil 160 handelt.

In einem Schritt 230 kann eine Verfügbarkeit des bestimmten Mittels 135 bestimmt werden. Die Verfügbarkeit kann insbesondere eine Gebindegröße, eine Lieferfrist, eine Anzahl unterschiedlicher Anbieter und andere Parameter umfassen. In einem Schritt 235 kann optional ein Lagerbestand des bestimmten Mittels 135 im Haushalt des Hausgeräts 100 bestimmt werden. Betrifft das Mittel 135 eine mittels eines Versorgungsnetzwerks bereitgestellte Sache, so kann ein Lager üblicherweise nicht angewandt werden. Andererseits kann beispielsweise ein Betriebsmittel 155 oder ein Ersatzteil 160 vorausschauend beschafft und in einem Lager im Haushalt des Hausgeräts 100 vorgehalten sein. Im Schritt 220 kann ein Preis für das Mittel 135 bestimmt werden.

Dem Ordern eines Mittels 135 oder Dienstes 140 liegt üblicherweise eine Verfügbarkeit eines ausreichenden Guthabens 115, 125 zu Grunde. In einem Schritt 240 kann das verfügbare Guthaben 115, 125 überprüft werden. In Abhängigkeit von zuvor bestimmten Parametern kann dann eine Entscheidung getroffen werden, welches Mittel 135 oder welcher Dienst 140 von welchem Anbieter unter welchen Rahmenbedingungen, insbesondere zu welchem Preis, geordert wird.

In einer Variante wird die Entscheidung nicht direkt getroffen, sondern eine voraussichtliche Entwicklung von Modalitäten für die Beschaffung des Mittels 135 oder Dienstes 140 wird bestimmt und das Hausgerät 100 wird in einem Schritt 245 so gesteuert, dass das Mittel 135 oder der Dienst 140 möglichst vorteilhaft für das Hausgerät 100 verfügbar ist. Dazu kann ein smart contract abgeschlossen werden. Vorteilhaft bedeutet dabei insbesondere, dass der Dienst 140 mit einer vorbestimmten Wahrscheinlichkeit innerhalb eines vorbestimmten Zeitraums verfügbar ist und ein dafür erforderlicher Preis, der vom Guthaben 115, 125 bestritten werden muss, möglichst gering ist. Handelt es sich beim zu beschaffenden Mittel 135 um eines, das mittels eines Versorgungsnetzwerks bereitgestellt wird, insbesondere Energie 145 oder Wasser 150, so kann eine vorhersehbare Schwankung eines Bereitstellungspreises über die Zeit antizipiert werden. Ein Betriebslauf des Hausgeräts 100 kann so terminiert werden, dass möglichst von geringen Versorgungskosten profitiert werden kann.

In einer anderen Ausführungsform kann eine Entscheidung zur Beschaffung eines Mittels 135 oder Dienstes 140 abschließend getroffen werden und eine entsprechende Order kann in einem Schritt 250 an einen Anbieter des Mittels 135 oder des Dienstes 140 herausgegeben werden.

### Bezugszeichen

- 100: Hausgerät
- 105: Funktionskomponente
- 110: Steuerkomponente
- 115: Guthaben
- 120: Cryptowallet
- 125: weiteres Guthaben
- 130: weitere Cryptowallet

- 135: Mittel
- 140: Dienst
- 145: Energie
- 150: Hilfsstoff
- 155: Betriebsmittel
- 160: Ersatzteil, Zubehörteil
- 165: Netzwerk
- 170: externe Stelle
- 175: Verarbeitungseinrichtung
- 180: Speichereinrichtung

- 200: Verfahren
- 205: Bestimmen erforderlicher Dienst
- 210: Bestimmen verfügbarer Dienst
- 215: Bestimmen Terminplan
- 220: Bestimmen Preis
- 225: Bestimmen erforderliches Mittel
- 230: Bestimmen verfügbares Mittel
- 235: Bestimmen Lagerstand
- 240: Bestimmen Guthaben
- 245: Steuern Hausgerät
- 250: Ordern Dienst oder Mittel

## Patentansprüche

1. Hausgerät (100), umfassend:
- eine Funktionskomponente (105), die dazu eingerichtet ist, eine haushaltsrelevante Funktion zu erbringen; und
- eine Steuerkomponente (110) zur Steuerung der Funktionskomponente (105);
- wobei die Steuerkomponente (110) dazu eingerichtet ist, ein Guthaben (115) einer Kryptowährung zu verwalten;
- wobei das Guthaben (115) ausschließlich für Mittel (135) oder Dienste (140) eingesetzt werden kann, welche der Erbringung der Funktion durch das Hausgerät (100) dienen.

2. Hausgerät (100) nach Anspruch 1, wobei das Guthaben (115) für ein Betriebsmittel (155) zum Betrieb des Hausgeräts (100) eingesetzt werden kann.

3. Hausgerät (100) nach Anspruch 1 oder 2, wobei das Guthaben (115) für Energie (145) zum Betrieb des Hausgeräts (100) eingesetzt werden kann.

4. Hausgerät (100) nach einem der vorangehenden Ansprüche, wobei das Guthaben (115) für einen Hilfsstoff (150) zum Betrieb des Hausgeräts (100) eingesetzt werden kann.

5. Hausgerät (100) nach einem der vorangehenden Ansprüche, wobei das Guthaben (115) zur Wartung oder Instandsetzung (140) des Hausgeräts (100) eingesetzt werden kann.

6. Hausgerät (100) nach einem der vorangehenden Ansprüche, wobei das Guthaben (115) zum Erwerb eines Ersatzteils (160) des Hausgeräts (100) eingesetzt werden kann.

7. Hausgerät (100) nach einem der vorangehenden Ansprüche, wobei das Guthaben (115) nicht erhöht werden kann.

8. Hausgerät (100) nach einem der vorangehenden Ansprüche, wobei das Guthaben (115) nicht auf ein anderes Gerät übertragbar ist.

9. Hausgerät (100) nach einem der vorangehenden Ansprüche, wobei das Hausgerät (100) eines von einer Waschmaschine, einem Wäschetrockner, einem Geschirrspüler, einer Abzugshaube, einem Herd, einem Ofen, einem Kühlschrank, einer Kaffeemaschine und einem Staubsauger umfasst.

10. Hausgerät (100) nach einem der vorangehenden Ansprüche, wobei die Steuerkomponente (110) dazu eingerichtet ist, ein weiteres Guthaben (125) einer Kryptowährung zu verwalten, wobei das weitere Guthaben (125) durch einen Benutzer aufgeladen werden kann.

11. Verfahren (200) zum Steuern eines Hausgeräts (100), das dazu eingerichtet ist, eine haushaltsrelevante Funktion zu erbringen, folgende Schritte umfassend:
- Bestimmen (205, 225) eines Mittels (135) oder Dienstes (140), welcher der Erbringung der Funktion durch das Hausgerät (100) dient;
- Einsetzen (245, 250) eines Guthabens (115), das dem Hausgerät (100) in Form einer Kryptowährung zugeordnet ist, für das Mittel (135) oder den Dienst (140).

12. Verfahren (200) nach Anspruch 11, wobei verschiedene Angebote für das Mittel (135) oder den Dienst (140) bestimmt werden und ein Mittel (135) oder ein Dienst (140) in Abhängigkeit einer Verfügbarkeit, eines Preises und/oder einer Dringlichkeit des Beschaffens ausgewählt (245, 250) wird.

13. Verfahren (200) nach Anspruch 11 oder 12, wobei das Mittel (135) in Abhängigkeit einer gesamten Lagerkapazität, einer verfügbaren Lagerkapazität und eines Preises für das Mittel (135) ausgewählt (250) wird.

14. Verfahren (200) nach einem der Ansprüche 11 bis 13, wobei ein Betrieb des Hausgeräts (100) in Abhängigkeit eines Preises für das Mittel (135) oder den Dienst (140) gesteuert (245) wird.

15. Verfahren (200) nach Anspruch 14, wobei ein zukünftiger Betrieb des Hausgeräts (100) unter Verwendung eines Mittels (135) oder Dienstes (140) mittels eines smart contract festgelegt (245) wird.
